# EUROPÄISCHE PATENTSCHRIFT

(11) **EP 1 315 057 B1**
(45) Veröffentlichungstag und Bekanntmachung des Hinweises auf die Patenterteilung: **08.09.2004**
(21) Anmeldenummer: 02023358.1
(22) Anmeldetag: 18.10.2002
(51) Int. Cl.: G05B 19/4093

(54) **Vorrichtung und Verfahren zur Erstellung und/oder Änderung von NC-Programmen oder NC-Tabellen**
Device and method for creating and/or changing NC programs or NC tables
Dispositif et procédé de création et/ou de modification de programmes CN ou de tables CN

(30) Priorität: 23.11.2001 DE 10157577
(43) Veröffentlichungstag der Anmeldung: 28.05.2003
(73) Patentinhaber: Dr. Johannes Heidenhain GmbH, 83292 Traunreut (DE)
(72) Erfinder: Rutkowski, Christian, 83278 Traunstein (DE)

(56) Entgegenhaltungen:
- EP-A- 0 553 433
- GB-A- 2 299 418
- US-A- 5 465 215
- US-A- 5 674 106
- US-A- 5 689 415
- US-A- 5 746 644

## Beschreibung

Die vorliegende Erfindung betrifft eine Vorrichtung sowie ein Verfahren zur Erstellung und/oder Änderung von NC-Programmen oder NC-Tabellen nach dem Oberbegriff des Anspruches 1 bzw. des Anspruchs 9.

In modernen Werkzeugmaschinen werden Numerische Steuerungen verwendet, um Werkstücke anhand eines NC-Programms zu bearbeiten. Diese NC-Programme werden dabei von der Numerischen Steuerung abgearbeitet, die ihrerseits die Werkzeugmaschine steuert und die nötigen Bearbeitungsschritte auslöst. Dies können etwa Schritte wie die Wahl des Werkzeuges, die Führung des Werkzeuges auf einer Werkzeugbahn oder das Einund Ausschalten von Kühlmitteln sein. Da Werkzeugmaschinen immer leistungsfähiger werden, wachsen auch die NC-Programme immer weiter an. Die Erstellung oder Änderung eines NC-Programms ist daher ein wichtiger und immer aufwendigerer Schritt bei der Bearbeitung von Werkstücken mit numerisch gesteuerten Werkzeugmaschinen. Es ist daher wichtig, den Ersteller eines solchen NC-Programms bestmöglich zu unterstützen, damit dieser auch große und komplexe Programmieraufgaben effizient und fehlerfrei lösen kann. Eine derartige Unterstützung ist im übrigen nicht nur bei der eigentlichen Erstellung des NC-Programmes hilfreich, sondern auch bei anderen vorbereitenden Maßnahmen zur Einrichtung des NC-Programmes, wie z.B. bei der Bestückung des Werkzeugmagazins, der Einrichtung eines Werkstückes, der Kalibrierung eines Werkzeuges etc..

Aus der EP 0 553 433 B1 ist eine gattungsgemäße Vorrichtung sowie ein gattungsgemäßes Verfahren bekannt, das den Programmierer unterstützt, der mit Hilfe eines automatischen Programmiersystemes ein NC-Programm erstellt. Hierbei werden dem Programmierer im Verlauf der Programmerstellung an entsprechenden Stellen der Programmierung vorgegebene Auswahllisten mit zugehörigen Datensätzen für sinnvolle bzw. zulässige Eingaben präsentiert, aus denen dann lediglich noch die gewünschte Eingabe ausgewählt werden muss. Hierbei kann es sich beispielsweise um eine Auswahlliste handeln, die die an dieser Stelle des NC-Programmes einsetzbaren Werkzeuge zur Auswahl anbietet.

Je nach Bearbeitungs- bzw. Maschinentyp sind unterschiedliche Auswahllisten an verschiedenen Stellen der Programmerstellung bzw. im Programmierbetrieb erforderlich. Wie nunmehr eine flexible Anpassung derartiger Auswahllisten bzw. Eingabehilfen an verschiedene Bearbeitungs- und Maschinen-Gegebenheiten erfolgen kann, ist der EP 0 553 433 B1 nicht zu entnehmen.

Es ist daher Aufgabe der vorliegenden Erfindung, eine Vorrichtung sowie ein Verfahren zu schaffen, welche eine flexible Anpassung von unterstützenden Eingabehilfen bei der NC-Programmerstellung und ähnlichen vorbereitenden Maßnahmen zur NC-Programmerstellung an unterschiedlichste Gegebenheiten ermöglichen.

Diese Aufgabe wird gelöst durch eine Vorrichtung mit den kennzeichnenden Merkmalen des Anspruches 1.

Vorteilhafte Ausführungsformen der erfindungsgemäßen Vorrichtung ergeben sich aus den Maßnahmen, die in den von Anspruch 1 abhängigen Ansprüchen aufgeführt sind.

Desweiteren wird diese Aufgabe wird gelöst durch ein Verfahren mit den kennzeichnenden Merkmalen des Anspruches 9.

Vorteilhafte Ausführungsformen des erfindungsgemäßen Verfahrens ergeben sich aus den Maßnahmen, die in den von Anspruch 9 abhängigen Ansprüchen aufgeführt sind.

Erfindungsgemäß ist nunmehr vorgesehen, in einem Konfigurationsbetrieb mit Hilfe eines Konfigurationsdatums den Inhalt einer Auswahlliste zum jeweiligen Eingabefeld zu konfigurieren, wobei das Konfigurationsdatum mindestens eine im Programmierbetrieb ausführbare Selektionsanweisung enthält. Im Programmierbetrieb wird die Selektionsanweisung ausgeführt und die Auswahlliste mit den selektierten Daten befüllt und angezeigt. Hierzu erfolgt über die Selektionsanweisung ein selektiver Zugriff auf mindestens eine Datenbank mit verfügbaren Bearbeitungsdaten.

Auf diese Art und Weise können nunmehr vom jeweiligen Maschinenhersteller flexibel Auswahllisten für unterschiedliche Eingabefelder und unterschiedliche Datenbanken konfiguriert werden. Neben der Konfiguration des Inhaltes kann in vorteilhafter Art und Weise eine weitere Konfiguration der Darstellung der Auswahlliste für den Programmierbetrieb vorgenommen werden.

Hierzu können in dem Konfigurationsdatum mehrere Selektionsanweisungen enthalten sein, die alternativ zur Ermittlung der anzuzeigenden Daten verwendet werden können. Beispielsweise können dergestalt unterschiedlichen Werkzeugtypen unterschiedliche Selektionsanweisungen zugeordnet werden, so dass auf der Anzeigeeinheit nach der Wahl eines bestimmten Werkzeugtypes dann lediglich die dem jeweiligen Werkzeugtyp zugeordneten Daten angezeigt werden.

Desweiteren ist in jedem Konfigurationsdatum zu jeder Selektionsanweisung eine Referenz bzw. ein Bezug auf ein Eingabemittel zu hinterlegen; hierbei kann es sich beispielsweise um einen wählbaren Menüpunkt, einen Softkey etc. handeln. Über dessen Aktivierung wird im Programmierbetrieb die zugehörige Abfrage mittels der Selektionsanweisung ausgeführt und die entsprechend selektierten Daten auf der Anzeigeeinheit angezeigt.

Ferner ist es zur flexiblen Anpassung der Auswahlliste vorteilhaft, wenn das Konfigurationsdatum zusätzlich mindestens eine ausführbare Darstellungs-Anweisung enthält, beispielsweise eine Textschablone, mit deren Hilfe eine geeignete Konfiguration der Darstellung der ausgewählten Daten auf der Anzeigeeinheit im Programmierbetrieb vorgenommen wird.

Grundsätzlich lassen sich auf die erfindungsgemäße Art und Weise verschiedenartigste Auswahllisten hinsichtlich Inhalt und Darstellung auf der Anzeigeeinheit konfigurieren, die im Verlauf der NC-Programmerstellung oder NC-Tabellenerstellung dem Programmierer für unterschiedlichste Eingabefelder angeboten werden. Hierbei ist es auf die erfindungsgemäße Art und Weise auch möglich, Auswahllisten bzw. Eingabehilfen nicht nur bei der eigentlichen NC-Programmerstellung zur Verfügung zu stellen, es können auch bei weiteren vorbereitenden Maßnahmen zur NC-Programmerstellung auf die erläuterte Weise Eingabehilfen in Form von Auswahllisten flexibel konfiguriert werden, wie z.B. bei der Bestückung des Werkzeugmagazins, der Einrichtung eines Werkstückes, der Kalibrierung eines Werkzeuges etc..

Weitere Vorteile sowie Einzelheiten der vorliegenden Erfindung ergeben sich aus der nachfolgenden Beschreibung eines Ausführungsbeispieles anhand der Figuren. Dabei zeigt
- Figur 1: eine schematisierte Blockschaltbild-Darstellung zur Erläuterung einer typischen Anwendung der erfindungsgemäßen Vorrichtung;
- Figur 2: eine erste Darstellung auf einer Anzeigeeinheit im Programmierbetrieb;
- Figur 3: eine zweite Darstellung auf einer Anzeigeeinheit im Programmierbetrieb.

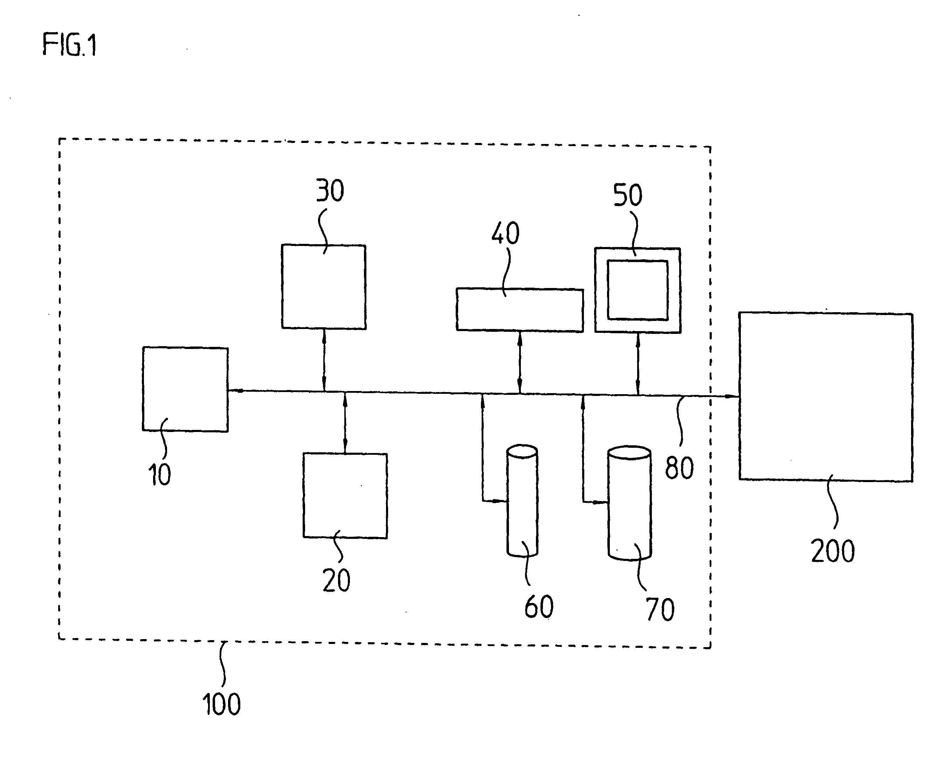

In Figur 1 ist in schematisierter Form ein Ausführungsbeispiel für eine Anwendung der erfindungsgemäßen Vorrichtung dargestellt. Eine numerische Werkzeugmaschinensteuerung 100 dient hierbei zur Steuerung der Bearbeitung von Werkstücken auf einer Werkzeugmaschine 200. Die numerische Werkzeugmaschinensteuerung 100 umfasst ein Reihe funktionsrelevanter Komponenten, die in Fig. 1 lediglich schematisch angedeutet sind. Über eine Busverbindung 80 ist eine Prozessoreinheit 10 mit einer NC-Programm-Speichereinheit 20, einem Arbeitsspeicher 30, einer Eingabeeinheit 40, einer Anzeigeeinheit 50 sowie mehreren Datenbanken 60, 70 auf Seiten der numerischen Werkzeugmaschinensteuerung 100 verbunden.

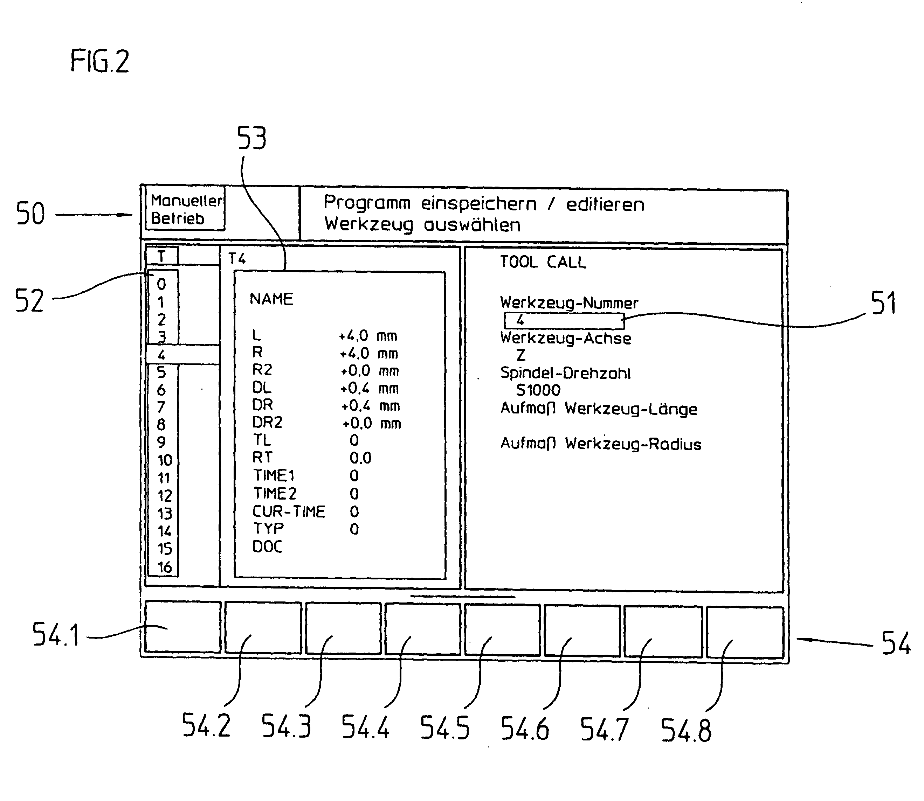

Die Erstellung eines NC-Programmes für die Werkstückbearbeitung mit der Werkzeugmaschine 200 erfolgt über den Programmierer in einem Programmierbetrieb, in dem ihm auf der Anzeigeeinheit 50 bestimmte unterstützende Eingabehilfen angeboten werden. Hierzu gehört etwa, dass zu bestimmten Eingabefeldern, in die für das zu erstellende NC-Programm erforderliche Bearbeitungsdaten eingegeben werden müssen, Auswahllisten mit an dieser Stelle zulässigen Bearbeitungsdaten angezeigt bzw. angeboten werden. Dies ist beispielsweise in Figur 2 dargestellt, die eine Ansicht der Anzeigeeinheit 50 im Programmierbetrieb zeigt.

Erkennbar ist in Figur 2 ein gerade aktives Eingabefeld 51 in der rechten Hälfte des Bildschirms der Anzeigeeinheit 50, über welches im Verlauf der NC-Programmerstellung ein geeignetes Werkzeug ausgewählt werden soll. Hierzu ist in diesem Eingabefeld 51 eine bestimmte Werkzeugnummer anzugeben. Im linken Teil der Anzeigeeinheit 50 ist ein Teil einer Auswahlliste in einem Selektionsfenster 52 dargestellt, die die an dieser Stelle des NC-Programmes mögliche Auswahl an verfügbaren Werkzeugen umfasst. Das in diesem Abschnitt der Anzeigeeinheit 50 dargestellte Selektionsfenster 52 der Auswahlliste umfasst hierbei nur die Nummern der verfügbaren Werkzeuge, also z.B. T4, T5, etc.. und dient für den Programmierer primär zur Selektion eines gewünschten Werkezeuges.

Zur vorgegebenen Auswahlliste an diese Stelle gehören desweiteren noch Ergänzungs- bzw. Beschreibungsdaten zu den verschiedenen, verfügbaren Werkzeugen. Die zu den verschiedenen Werkzeugen gehörenden Beschreibungsdaten werden auf der Anzeigeeinheit 50 im vorliegenden Beispiel in einem Beschreibungsfenster 53 dargestellt. Über die Beschreibungsdaten werden dem NC-Programmierer weitere Informationen zu den verschiedenen Werkzeugen in der Auswahlliste angeboten. Im dargestellten Beispiel handelt es sich bei den angezeigten Beschreibungsdaten im Beschreibungsfenster 53 um eine Reihe von unterschiedlichen Technologiedaten zu den einzelnen Werkzeugen, die dem Programmierer an dieser Stelle zur Unterstützung visualisiert werden. Es ist hierbei sichergestellt, dass jeweils im angezeigten Beschreibungsfenster 53 nur die Beschreibungsdaten zum gerade markierten Werkzeug angezeigt werden, d.h. im vorliegenden Beispiel also die Beschreibungsdaten 53 zum Werkzeug T4 etc..

Im Selektionsfenster 52 mit insgesamt 16 verfügbaren bzw. zulässigen Werkzeugen der Auswahlliste wählt der Programmierer mit Hilfe der Eingabeeinheit, das gewünschte Werkzeug aus und setzt die NC-Programmerstellung anschließend fort. Die Auswahl eines entsprechenden Werkzeuges aus dem Selektionsfenster 52 kann in bekannter Art und Weise etwa über die Cursor-Tasten und die Eingabe-Taste der als Rechner-Tastatur ausgebildeten Eingabeeinheit erfolgen etc..

Desweiteren ist es im dargestellten Ausführungsbeispiel möglich, aus den verschiedenen zulässigen Werkzeugen der Auswahlliste mittels Softkeys 54 die Auswahl angezeigter Werkzeuge zu modifizieren, ohne dass die derzeitige Ansicht gewechselt werden muss. So kann etwa ein Softkey 54.1 vorgesehen sein, über dessen Betätigung das Selektionsfenster 52 auf die Ansicht verfügbarer Werkzeuge für das gerade aktuelle Eingabefeld auf Bohrwerkzeuge eingeschränkt wird; über die weiteren Softkeys 54.2 - 54.7 erfolgt die Auswahl weiterer Werkzeugtypen wie z.B. Gewindebohrwerkzeuge, Fräswerkzeuge, Drehstähle, Schleifscheiben etc..

Eine derartige Einschränkung bzw. Selektion der angezeigten Daten aus der konfigurierten Auswahlliste kann neben den Softkeys 54 selbstverständlich auch über alternative Eingabemittel im Programmierbetrieb erfolgen, wie z.B. über wählbare Menüpunkte eines Pull-Down-Menüs, eine Schaltfläche für ein Zeigegegerät oder bestimmte Tastenkombinationen usw..

Bei den im Selektionsfenster 52 und im Beschreibungsfenster 53 dargestellten Daten der konfigurierten Auswahlliste handelt es sich um bestimmte Felder aus einer Werkzeugdatenbank, die an dieser Stelle der NC-Programmerstellung visualisiert werden. Das Selektionsfenster 52 enthält im dargestellten Beispiel mit der Werkzeugnummer lediglich ein einziges Feld, während weitere informative Daten zu den einzelnen Werkzeugen daneben im Beschreibungsfenster 53 dargestellt werden.

Alternativ hierzu wäre es grundsätzlich auch möglich sämtliche anzuzeigenden Daten der Auswahlliste pro zulässigem Werkzeug in einem einzigen Fenster auf der Anzeigeeinheit darzustellen. Eine derartige Vorgehensweise bietet sich z.B. an, wenn für ein Eingabefeld bzw. einen Eintrag der Auswahlliste nur wenige zulässige Bearbeitungsdaten vorhanden sind und eine übersichtliche Darstellung aller zulässigen Selektions- und Beschreibungsdaten der Auswahlliste in einem einzigen Fenster möglich ist.

Grundsätzlich erweist es sich aus Gründen der Übersichtlichkeit als vorteilhaft, möglichst alle Beschreibungsdaten zu einem Eintrag der Auswahlliste auf einer einzigen Bildschirmseite darzustellen.

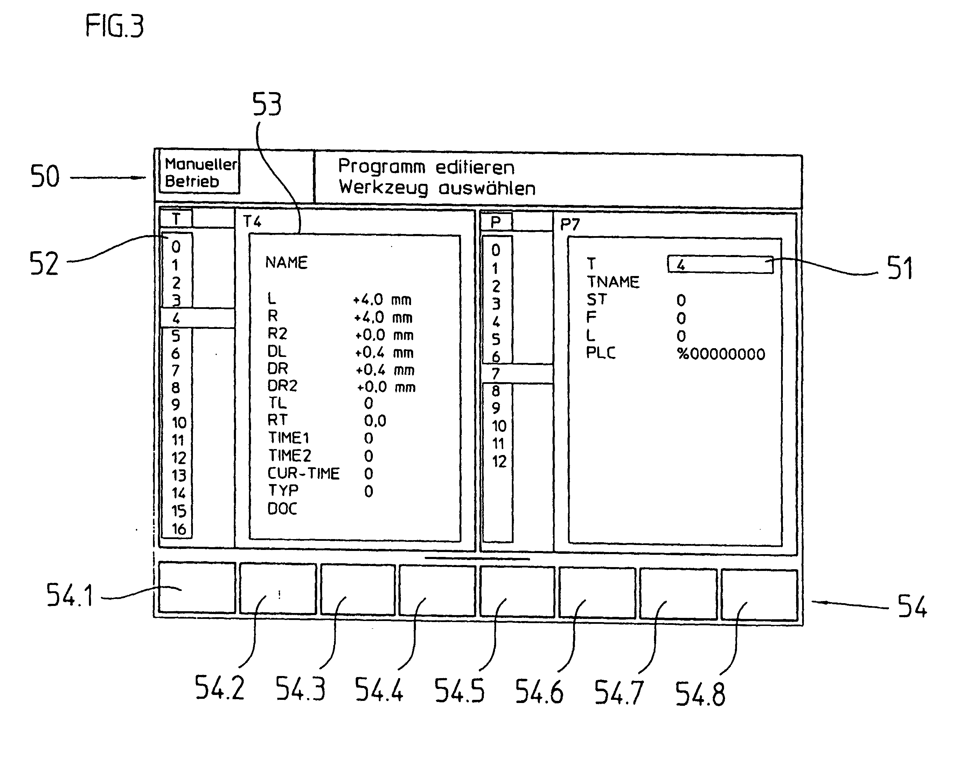

Ein weiteres Beispiel, wie mit Hilfe derartiger, konfigurierter Auswahllisten für zulässige Bearbeitungsdaten und deren Visualisierung auf der Anzeigeeinheit der Programmierer im Programmierbetrieb unterstützt wird, ist in Figur 3 dargestellt. Diese Beispiel sei stellvertretend für sonstige vorbereitende Maßnahmen zur NC-Programmerstellung bzw. NC-Tabellenerstellung erwähnt, bei denen die erfindungsgemäßen Maßnahmen ebenfalls eingesetzt werden können. So ist gemäß Figur 3 ein Editieren der Platztabelle vorgesehen, bei dem bestimmten Plätzen des Werkzeugmagazins ein entsprechendes Werkzeug zugeordnet wird.

Im dargestellten Beispiel wird für den Platz P7 in einem Eingabefeld 51 gerade das zugehörige Werkzeug spezifiziert. Im linken Teil der Anzeigeeinheit 50 ist hierbei wiederum eine Selektionsfenster 52 mit den an dieser Stelle zulässigen bzw. verfügbaren Werkzeugen dargestellt, aus denen der NC-Programmierer das gewünschte Werkzeug auswählen kann. Ebenso wie im obigen Beispiel werden zu den verschiedenen verfügbaren Werkzeugen wiederum in einem Beschreibungsfenster 53 Beschreibungsdaten zur Unterstützung des NC-Programmierers dargestellt.

Wesentlich für die vorliegende Erfindung ist nunmehr, dass in einem Konfigurationsbetrieb eine flexible Anpassung der jeweiligen Auswahllisten sowie deren Visualisierung auf der Anzeigeeinheit für die verschiedenen Eingabefelder als Eingabehilfe möglich ist. Damit lassen sich etwa für den Hersteller einer Werkzeugmaschine die Auswahllisten in flexibler Form an die jeweiligen Maschinen-Gegebenheiten anpassen, um somit den NC-Programmierer gezielt bzw. maschinenspezifisch zu unterstützen.

Zu diesem Zweck wird im Konfigurationsbetrieb die Auswahlliste zu einem Eingabefeld inhaltlich über ein Konfigurationsdatum konfiguriert, wobei das Konfigurationsdatum zumindest eine ausführbare Selektionsanweisung enthält. Im eigentlichen Programmierbetrieb erfolgt dann eine Ausführung der Selektionsanweisung dergestalt, dass eine Befüllung der Auswahlliste mit den selektierten Daten und eine Anzeige der konfigurierten Auswahlliste auf der Anzeigeeinheit resultiert. Hierzu wird über die Selektionsanweisung selektiv auf mindestens eine Datenbank mit verfügbaren Bearbeitungsdaten zugegriffen. Wie aus dem obigen Beispiel ersichtlich, kann es sich bei der Datenbank, auf die im Programmierbetrieb zugegriffen wird, um eine Datenbank handeln, in der als Bearbeitungsdaten vielfältigste Werkzeugdaten tabellenartig organisiert abgelegt sind. In Figur 1 sind ensprechende Datenbanken im übrigen mit den Bezugszeichen 60 und 70 schematisiert angedeutet.

Als ausführbare Selektionsanweisung zur Konfiguration des Inhaltes einer geeigneten Auswahlliste enthält das Konfigurationsdatum vorzugsweise mindestens einen SQL-Befehl bzw. ein SQL-Statement. Über diese Selektionsanweisung werden im Programmierbetrieb Daten aus einer Datenbank selektiv ausgelesen und auf der Anzeigeeinheit visualisiert. Ein Beispiel für einen derartigen SQL-Befehl, mit dem z.B. die Auswahlliste aus dem Beispiel in Figur 2 konfiguriert wird, lautet etwa:
"SELECT T, NAME, L R, R2, DL, DR, DR2, TL, TR, TIME1, TIME2, CUR-TIME, TYP, DOC FROM TOOL WHERE TYP=2 ORDER BY T"

Neben der inhaltlichen Konfiguration einer Auswahlliste über die Selektionsanweisung können erfindungsgemäß auch noch weitere Eigenschaften der Auswahlliste zu einem Eingabefeld im Konfigurationsbetrieb flexibel konfiguriert werden.

So lässt sich als weitere Eigenschaft der konfigurierten Auswahlliste im Rahmen der vorliegenden Erfindung auch die Darstellung der jeweiligen Auswahlliste auf der Anzeigeeinheit konfigurieren. In den beiden oben erläuterten Beispielen handelt es sich hierbei um die Art und Weise der Anzeige der Selektions- und Beschreibungsfenster. Zu diesem Zweck wird im Konfigurationsbetrieb dem Konfigurationsdatum zu einem bestimmten Eingabefeld desweiteren mindestens eine ausführbare Darstellungs-Anweisung zugeordnet. Mit deren Hilfe erfolgt die Konfiguration der Darstellung der im Programmierbetrieb auf der Anzeigeeinheit anzuzeigenden Daten der Auswahlliste, also etwa in Form eines Selektions- und eines Beschreibungsfensters.

Hierbei ist es z.B. möglich, mit der Darstellungs-Anweisung im Konfigurationsbetrieb eine Textschablone bzw. einen Formatstring zu einem Eingabefeld im Konfigurationsdatum zu hinterlegen, in den dann die anzuzeigenden Daten im Programmierbetrieb eingesetzt werden. Im Beispiel der Figur 2 wird etwa damit festgelegt, dass das Selektionsfenster 52 am linken Rand der Anzeigeeinheit 50 in die Nummern der an dieser Stelle zulässigen Werkzeuge anzeigt. Vom gerade markierten Werkzeug werden im daneben platzierten Beschreibungsfenster 53 bestimmte Ergänzungsdaten angezeigt, nämlich die Felder L, R, R2 etc. mit den Feldbezeichnern und den zugehörigen Einträgen in der ausgelesenen Datenbank.

Desweiteren wird in Verbindung mit der Darstellungs-Anweisung im Konfigurationsbetrieb festgelegt, welches konkrete Feld aus dem angezeigten Datensatz in das Eingabefeld übernommen wird. Im obigen Beispiel der Figur 2 wird beispielsweise die Werkzeugnummer in das Eingabefeld 51 übemommen.

Darüberhinaus kann vorgesehen werden, dass einem Konfigurationsdatum im Konfigurationsbetrieb für ein Eingabefeld mehrere Selektionsanweisungen zugeordnet werden, die alternativ zur Ermittlung der anzuzeigenden Daten verwendet werden können. Beispielsweise können dergestalt unterschiedlichen Werkzeugtypen unterschiedliche Selektionsanweisungen zugeordnet werden, so dass auf der Anzeigeeinheit nach der Wahl eines bestimmten Werkzeugtypes dann lediglich die dem jeweiligen Werkzeugtyp zugeordneten Daten angezeigt werden.

Desweiteren ist in jedem Konfigurationsdatum zu jeder Selektionsanweisung eine Referenz bzw. ein Bezug auf ein Eingabemittel zu hinterlegen; hierbei kann es sich beispielsweise um einen wählbaren Menüpunkt, einen Softkey, eine Tastenkombination, eine Schaltfläche für ein Zeigegegerät etc. handeln. Über dessen Aktivierung wird im Programmierbetrieb die zugehörige Abfrage mittels der Selektionsanweisung ausgeführt und die entsprechend selektierten Daten auf der Anzeigeeinheit angezeigt; im Beispiel der Figur 2 war es etwa möglich, mithilfe der verschiedenen Softkeys unterschiedliche, zulässige Werkzeugtypen - etwa Bohrwerkzeuge - aus der Auswahlliste auf der Anzeigeeinheit zu visualiseren.

In den erläuterten Beispielen wurden als Bearbeitungsdaten in den verschiedenen Datenbanken, die Eingabefeldern zugeordnet sind, primär Werkzeugdaten erwähnt. Darüberhinaus ist es jedoch selbstverständlich möglich, dass entsprechende Datenbanken mit weiteren Bearbeitungsdaten wir z.B. Werkstoffdaten, Schneidstoffdaten oder Werkzeugpositionsdaten entsprechend in Verbindung mit der vorliegenden Erfindung genutzt werden.

Über die erfindungsgemäßen Maßnahmen, lassen sich somit in individueller und flexibler Art und Weise Auswahllisten bzw. Eingabehilfen zu Eingabefeldern eines NC-Programmes erstellen und anpassen. Neben den erläuterten Beispielen existieren im Rahmen der vorliegenden Erfindung selbstverständlich vielfältigste Alternativen.

## Patentansprüche

1. Vorrichtung zur Erstellung und/oder Änderung von NC-Programmen oder NC-Tabellen, bei der in einem Programmierbetrieb auf einer Anzeigeeinheit Eingabefelder für Bearbeitungsdaten und zu den Eingabefeldern zugehörige Auswahllisten mit zulässigen Bearbeitungsdaten angezeigt sind,
**dadurch gekennzeichnet, dass**
- in einem Konfigurationsbetrieb der Inhalt einer Auswahlliste zu einem Eingabefeld (51) über ein zugeordnetes Konfigurationsdatum konfigurierbar ist, wobei das Konfigurationsdatum zumindest eine ausführbare Selektionsanweisung enthält und
- im Programmierbetrieb eine Ausführung der Selektionsanweisung dergestalt erfolgt, dass eine Befüllung der Auswahlliste mit den selektierten Daten und eine Anzeige der konfigurierten Auswahlliste auf der Anzeigeeinheit (50) resultiert, indem über die Selektionsanweisung ein selektiver Zugriff auf mindestens eine Datenbank (60, 70) mit verfügbaren Bearbeitungsdaten erfolgt.

2. Vorrichtung nach Anspruch 1, **dadurch gekennzeichnet, dass** das Konfigurationsdatum ferner eine ausführbare Darstellungsanweisung enthält, über die die Art der Darstellung der Auswahlliste auf der Anzeigeeinheit (50) konfigurierbar ist.

3. Vorrichtung nach Anspruch 2, **dadurch gekennzeichnet, dass** auf der Anzeigeeinheit (50) ein Selektionsfenster (52) und ein Beschreibungsfenster (53) anzeigbar sind, die Daten der konfigurierten Auswahlliste enthalten.

4. Vorrichtung nach Anspruch 1, **dadurch gekennzeichnet, dass** dem Konfigurationsdatum mehrere Selektionsanweisungen zugeordnet sind, die alternativ zur Ermittlung der anzuzeigenden Daten verwendbar sind.

5. Vorrichtung nach Anspruch 4, **dadurch gekennzeichnet, dass** jeder Selektionsanweisung eine Referenz auf ein definiertes Eingabemittel für den Programmierbetrieb zugeordnet ist.

6. Vorrichtung nach Anspruch 5, **dadurch gekennzeichnet, dass** als Eingabemittel im Programmierbetrieb ein oder mehrere der folgenden Varianten vorgesehen sind:
- Softkeys,
- wählbare Menüpunkte,
- Tastenkombinationen,
- Schaltflächen für Zeigegeräte.

7. Vorrichtung nach mindestens einem der vorhergehenden Ansprüche, **dadurch gekennzeichnet, dass** das Konfigurationsdatum als ausführbare Selektionsanweisung mindestens einen SQL-Befehl enthält.

8. Vorrichtung nach mindestens einem der vorhergehenden Ansprüche, **dadurch gekennzeichnet, dass** die Datenbank (60, 70) ein oder mehrere Kategorien der folgenden Bearbeitungsdaten enthält:
- Werkzeugdaten,
- Werkstoffdaten,
- Schneidstoffdaten,
- Werkzeugpositionierungsdaten,
- Werkstückpositionierungsdaten.

9. Verfahren zur Erstellung und/oder Änderung von NC-Programmen oder NC-Tabellen, bei der in einem Programmierbetrieb auf einer Anzeigeeinheit Eingabefelder für Bearbeitungsdaten und zu den Eingabefeldern zugehörige Auswahllisten mit zulässigen Bearbeitungsdaten angezeigt werden,
**dadurch gekennzeichnet, dass**
- in einem Konfigurationsbetrieb die Auswahlliste zu einem Eingabefeld (51) inhaltlich über ein zugeordnetes Konfigurationsdatum konfiguriert wird, wobei das Konfigurationsdatum zumindest eine ausführbare Selektionsanweisung enthält und
- im Programmierbetrieb die Selektionsanweisung dergestalt ausgeführt wird, dass die Auswahlliste mit den selektierten Daten befüllt wird und die konfigurierte Auswahlliste auf der Anzeigeeinheit (50) angezeigt wird, indem über die Selektionsanweisung selektiv auf mindestens eine Datenbank (60, 70) mit verfügbaren Bearbeitungsdaten zugegriffen wird.

10. Verfahren nach Anspruch 9, **dadurch gekennzeichnet, dass** das Konfigurationsdatum ferner eine ausführbare Darstellungsanweisung enthält, über die die Art der Darstellung der Auswahlliste auf der Anzeigeeinheit (50) konfiguriert wird.

11. Verfahren nach Anspruch 10, **dadurch gekennzeichnet, dass** auf der Anzeigeeinheit (50) ein Selektionsfenster (52) und ein Beschreibungsfenster (53) angezeigt werden, die Daten der konfigurierten Auswahlliste enthalten.

12. Verfahren nach Anspruch 9, **dadurch gekennzeichnet, dass** dem Konfigurationsdatum mehrere Selektionsanweisungen zugeordnet werden, die alternativ zur Ermittlung der anzuzeigenden Daten verwendbar sind.

13. Verfahren nach Anspruch 12, **dadurch gekennzeichnet, dass** jeder Selektionsanweisung eine Referenz auf ein definiertes Eingabemittel für den Programmierbetrieb zugeordnet wird.

## Claims

1. Device for generating and/or editing NC programs or NC tables, in which device, in a programming mode, input fields for machining data and selection lists belonging to the input fields and having permissible machining data are displayed on a display unit,
**characterised in that**
- in a configuration mode, the contents of a selection list for an input field (51) may be configured via an associated configuration datum, the configuration datum containing at least one executable selection instruction, and
- in the programming mode, the selection instruction is executed in such a way that, as a result, the selection list is filled with the selected data and the configured selection list is displayed on the display unit (50) by selective access being made, via the selection instruction, to at least one database (60, 70) having available machining data.

2. Device according to claim 1, **characterised in that** the configuration data also contains an executable display instruction, via which the type of display of the selection list on the display unit (50) may be configured.

3. Device according to claim 2, **characterised in that** a selection window (52) and a descriptive window (53), which contain data of the configured selection list, may be displayed on the display unit (50).

4. Device according to claim 1, **characterised in that** a plurality of selection instructions is assigned to the configuration datum and these may alternatively be used to determine the data to be displayed.

5. Device according to claim 4, **characterised in that** a reference to a defined input means for the programming mode is assigned to each selection instruction.

6. Device according to claim 5, **characterised in that** one or more of the following variants are provided as input means in the programming mode:
- soft keys,
- selectable menu options,
- key combinations,
- control pads for pointing devices.

7. Device according to at least one of the preceding claims, **characterised in that** the configuration datum contains at least one SQL command as the executable selection instruction.

8. Device according to at least one of the preceding claims, **characterised in that** the database (60, 70) contains one or more categories of the following machining data:
- tool data,
- material data,
- cutting material data,
- tool positioning data,
- workpiece positioning data.

9. Method for generating and/or editing NC programs or NC tables, in which method, in a programming mode, input fields for machining data and selection lists belonging to the input fields and having permissible machining data are displayed on a display unit,
**characterised in that**
- in a configuration mode, the contents of the selection list for an input field (51) are configured via an associated configuration datum, the configuration datum containing at least one executable selection instruction, and
- in the programming mode, the selection instruction is executed in such a way that the selection list is filled with the selected data and the configured selection list is displayed on the display unit (50) by selective access being made, via the selection instruction, to at least one database (60, 70) having available machining data.

10. Method according to claim 9, **characterised in that** the configuration datum also contains an executable display instruction via which the type of display of the selection list on the display unit (50) is configured.

11. Method according to claim 10, **characterised in that** a selection window (52) and a descriptive window (53), which contain data of the configured selection list, are displayed on the display unit (50).

12. Method according to claim 9, **characterised in that** a plurality of selection instructions is assigned to the configuration data and these may alternatively be used to determine the data to be displayed.

13. Method according to claim 12, **characterised in that** a reference to a defined input means for the programming mode is assigned to each selection instruction.

## Revendications

1. Dispositif pour la création et/ou la modification de programmes de commande numérique ou de tableaux de commande numérique, dans lequel, dans un mode de programmation, des champs d'entrée pour des données d'usinage et des listes de sélection avec des données d'usinage autorisées associées aux champs d'entrée peuvent être affichés sur une unité d'affichage,
**caractérisé par le fait que**
dans un mode, de configuration, le contenu d'une liste de sélection pour un champ d'entrée (51) peut être configuré par l'intermédiaire d'une donnée de configuration associée, la donnée de configuration comprenant au moins une instruction de sélection exécutable, et
en mode de programmation, l'instruction de sélection est exécutée d'une manière telle qu'il en résulte un remplissage de la liste de sélection avec les données sélectionnées et un affichage de la liste de sélection configurée sur l'unité d'affichage (50), un accès sélectif à au moins une banque de données (60, 70) avec des données d'usinage disponibles ayant lieu par l'intermédiaire de l'instruction de sélection.

2. Dispositif selon la revendication 1, **caractérisé par le fait que** la donnée de configuration contient en outre une instruction d'affichage exécutable par l'intermédiaire de laquelle le mode de représentation de la liste de sélection sur l'unité d'affichage (50) peut être configuré.

3. Dispositif selon la revendication 2, **caractérisé par le fait que** sur l'unité d'affichage (50) peuvent être affichées une fenêtre de sélection (52) et une fenêtre de description (53), qui contiennent les données de la liste de sélection configurée.

4. Dispositif selon la revendication 1, **caractérisé par le fait qu'**à la donnée de configuration sont associées plusieurs instructions de sélection qui peuvent être utilisées de manière alternative pour déterminer les données à afficher.

5. Dispositif selon la revendication 4, **caractérisé par le fait qu'**à chaque instruction de sélection est associée une référence sur un moyen d'entrée défini pour le mode de programmation.

6. Dispositif selon la revendication 5, **caractérisé par le fait qu'**il est prévu comme moyen d'entrée en mode de programmation, une ou plusieurs des variantes suivantes :
• boutons logiciels,
• points de menu sélectionnables,
• combinaisons de touches,
• surfaces cliquables pour des moyens de pointage.

7. Dispositif selon au moins une des revendications précédentes, **caractérisé par le fait que** la donnée de configuration contient comme instruction de sélection exécutable au moins une requête SQL.

8. Dispositif selon au moins une des revendications précédentes, **caractérisé par le fait que** la banque de données (60, 70) contient une ou plusieurs des catégories de données d'usinage suivantes :
• données d'outil,
• données de matériau,
• données de matériau de coupe,
• données de positionnement d'outil,
• données de positionnement de pièce.

9. Procédé pour la création et/ou la modification de programmes de commande numérique ou de tableaux de commande numérique, dans lequel dans un mode de programmation, des champs d'entrée pour des données d'usinage et des listes de sélection avec des données d'usinage autorisées associées aux champs d'entrée sont affichés sur une unité d'affichage,
**caractérisé par le fait que**
dans un mode de configuration, on configure le contenu d'une liste de sélection pour un champ d'entrée (51) par l'intermédiaire d'une donnée de configuration associée, la donnée de configuration comprenant au moins une instruction de sélection exécutable, et
en mode de programmation, l'instruction de sélection est exécutée d'une manière telle que la liste de sélection est remplie avec les données sélectionnées et la liste de sélection configurée est affichée sur l'unité d'affichage (50), un accès sélectif à au moins une banque de données (60. 70) avec des données d'usinage disponibles ayant lieu par l'intermédiaire de l'instruction de sélection.

10. Procédé selon la revendication 9, **caractérisé par le fait que** la donnée de configuration contient en outre une instruction d'affichage exécutable, par l'intermédiaire de laquelle le mode de représentation de la liste de sélection sur l'unité d'affichage (50) est configuré.

11. Procédé selon la revendication 10, **caractérisé par le fait que** sur l'unité d'affichage (50) sont affichées une fenêtre de sélection (52) et une fenêtre de description (53) qui contiennent les données de la liste de sélection configurée.

12. Procédé selon la revendication 9, **caractérisé par le fait qu'**à la donnée de configuration sont associées plusieurs instructions de sélection qui peuvent être utilisées de manière alternative pour déterminer les données à afficher.

13. Procédé selon la revendication 12, **caractérisé par le fait qu'**à chaque instruction de sélection est associée une référence sur un moyen d'entrée défini pour le mode de programmation.
